## Europäisches Patentamt
## European Patent Office
## Office européen des brevets

(19)

(11) Publication number: **0 044 618**

**A2**

(12)

# EUROPEAN PATENT APPLICATION

(21) Application number: **81302721.6**

(22) Date of filiiiing: **17.06.81**

(51) Int. Cl.³: **G 02 F 1/133**
**G 02 F 1/137**

(30) Priority: **19.06.80 GB 8020040**
**19.06.80 GB 8020074**

(43) Date of publication of application:
**27.01.82 Bulletin 82/4**

(84) Designated Contracting States:
**CH DE FR LI NL**

(71) Applicant: **ITT INDUSTRIES, INC.**
**320 Park Avenue**
**New York, NY 10022(US)**

(84) Designated Contracting States:
**CH FR LI NL**

(71) Applicant: **Deutsche ITT Industries GmbH**
**Hans-Bunte-Strasse 19 Postfach 840**
**D-7800 Freiburg(DE)**

(84) Designated Contracting States:
**DE**

(72) Inventor: **Crossland, William Alden**
**15 School Lane**
**Harlow Essex(GB)**

(72) Inventor: **Coates, David**
**21 Thornbera Gardens**
**Bishop's Stortford Hertfordshire(GB)**

(72) Inventor: **Mash, Derek Hubert**
**78 Upper Park**
**Harlow Essex(GB)**

(72) Inventor: **Needham, Barbara**
**15 Portland Road**
**Bishop's Stortford Hertfordshire(GB)**

(72) Inventor: **Ayliffe, Peter John**
**150 Heath Row**
**Bishop's Stortford Hertfordshire(GB)**

(72) Inventor: **Brewer, John William**
**169 Guilfords**
**Old Harlow Essex, CM17 OHZ(GB)**

(72) Inventor: **Arton, Kenneth Alexander Manson**
**8 Clover Field**
**Harlow Essex(GB)**

(72) Inventor: **Ross, Peter William**
**15 Twyford Gardens**
**Bishop's Stortford Hertfordshire(GB)**

(72) Inventor: **Rokos, George Hedley Storm**
**16 South Road**
**Bishop's Stortford Hertfordshire(GB)**

(74) Representative: **Laurence, Simon French**
**ITT UK Patent Department Maidstone Road Foots Cray**
**Sidcup DA14 5HT(GB)**

(54) **Liquid crystal display devices.**

(57) A dyed cholesteric nematic phase change liquid crystal display cell on a silicon slice 1 providing an MOS active addressing matrix via electrode pads 13 preferably made of substantially non-specularly reflecting deposited metal.

W.A.Crossland-D.H.Mash-D.Coates-
B.Needham-K.A.M.Arton-P.W.Ross-
G.H.B.Rokos-P.J.Ayliffe-J.W.Brewer-
30-27-10-6-4/5-4-3-2-1X.

LIQUID CRYSTAL DISPLAY DEVICE

This invention relates to liquid crystal display devices in which the liquid crystal layer is bounded on one side by a semiconductive substrate, and to the manner of operation of such devices.

One such type of display device has been described by M.N.Ernstaff et al, IEEE International Electronic Devices Meeting Technical Digest 73 CH 0781-5 ED (1973) 548, and in United States Patent No. 4,100,579. The liquid crystal electro-optic effect used in that instance was dynamic scattering. This has the disadvantage that it involves relatively high currents compared with devices using field-effect electro-optic phenomena. A lower current is particularly desired in any system in which display elements are addressed on a time sharing basis because it means that, in order to keep the voltage decay within given limits, the charge storage requirements are less for a given interval between successive addressings of an element.

According to the present invention there is provided a dyed cholesteric-nematic phase change liquid crystal display cell which has a positive dielectric anisotropy cholesteric liquid crystal layer incorporating a pleochroic dye or dye mixture characterised in that the liquid crystal layer is sandwiched between an upper transparent electroded plate and lower plate formed by, or carrying, a semiconductor layer provided with a matrix array of semiconductor gates connected with an overlying matrix array of electrode elements adjacent the liquid crystal layer, and wherein the nature of the two surfaces confining the liquid crystal layer is such as to promote a particular molecular alignment in the layer in the absence of an applied electric field.

To achieve a display of any significant complexity it will normally be necessary for the display elements to be multiplexed, that is the elements must be matrix addressed and the electrical addressing signals must be time shared between the elements. Direct matrix addressing of the elements requires an electro-optic effect with a very sharp voltage threshold, and time sharing requires one with a fast 'on' time. The wellknown difficulties of directly multiplexing liquid crystal displays stem from their less than ideal properties in respect of both these requirements. Compromises can be greatly eased if the drive to the liquid crystal element is separated from the accessing function, and incorporates storage which maintains the liquid crystal drive to each element between consecutive addressing pulses to that element. The requirement for the sharp threshold can then be transferred to the access circuitry. This can be provided by arranging a highly non-linear circuit element in association with each cross-point in the matrix. One of the currently most practical circuit elements for this application is the field effect transistor. Suitable matrices of such devices can be made for instance using the technology of forming thin film transistors on glass substrates, of forming silicon based transistors on sapphire substrates, or of forming silicon transistors on standard single crystal silicon wafers. The last mentioned of these technologies is the one currently preferred by us because of its extensive usage in the semiconductor industry.

In each case a co-ordinate matrix of conductors arrayed in rows and columns can be provided on the substrate with at least one transistor at each cross-point.

More than one may be provided to give redundancy. At each such cross-point the gate of the or each transistor associated with that cross-point is connected to one of the conductors defining that cross-point, the drain is connected to a large area electrically conductive pad, associated with that cross-point, and through which the liquid crystal is addressed. The liquid crystal layer is either in direct contact with these pads, or preferably is separated from them only by a thin electrically insulating layer provided to prevent the possibility of electrolytic degradation of the liquid crystal medium through exposure to a direct current flow for an extended period of time.

In this way it is possible for a large number of display elements to be addressed without the performance penalties usually associated with directly multiplexed liquid crystal displays. This is because each display element is provided either with substantially the full drive voltage or zero drive voltage. Therefore, if the effects of leakage can be ignored, the limitation of the number of display elements that can be addressed is set by the semiconductor matrix, and the page write time is determined by the response of the liquid crystal to its full drive voltage. Therefore such displays should retain the same viewing angle, temperature range, and contrast ratio as their non-multiplexed directly driven counterparts.

The chosen electro-optic effect for the display is the cholesteric nematic phase change, and this effect is used to provide a visual effect by making use of a guest-host interaction between the liquid crystal and the pleochroic dye. A particular advantage of this is that there is no need to use polarisers. This is an advantage partly because of the difficulty in providing a polarising layer directly on top of the silicon, and also because it avoids the inevitable light attentuation involved in the use of polarisers.

The silicon backing to the liquid crystal layer precludes its use as a transmission type device, and therefore some form of reflector is required to back the liquid crystal layer. This may be a conventional specular reflector provided for instance by a conventional evaporated metal layer for instance of aluminium or silver. A specular reflector does however provide certain restraints upon viewing angle and illumination conditions in order to avoid troublesome unwanted reflections. This problem is avoided by using a non-specular reflecting surface. If a diffusing surface is employed, which approximates to a Lambertian diffuser, a significant proportion of the light is lost through the operation of the window effect. This window effect arises because the scattering surface is in direct contact with a relatively high refractive index medium, and hence any light scattered into angles greater than the critical angle is unable directly to escape from the display. A preferred form of reflector is therefore one that is non-specular, but which scatters light predominately into a relatively small solid angle centred on the specular reflection direction. Such a reflector can be prepared for instance by controlled evaporation of aluminium to provide a slow deposition rate typically of about 0.6 nm per second on to a hot substrate typically at about $300^{\circ}$C so as to promote grain growth in the deposit.

The cholesteric-nematic phase change effect requires the surfaces confining the liquid crystal layer to be such as to promote, at the surfaces of the liquid crystal layer, a particular molecular alignment of the liquid crystal molecules in the absence of any applied field. This alignment may be homeotropic or parallel homogeneous. Parallel homogeneous, which produces the Grandjean state, is preferred because it has been found that this provides a faster response time, and, through in transmission type devices this can have some disadvantage of providing an unwelcome textured effect on relaxation from the nematic back into the cholesteric state, we have found that this textured effect is less noticeable in reflection type displays, particularly when the reflector is in close proximity to the liquid crystal, and more particularly when the 'reflector' is of a non-specular type.

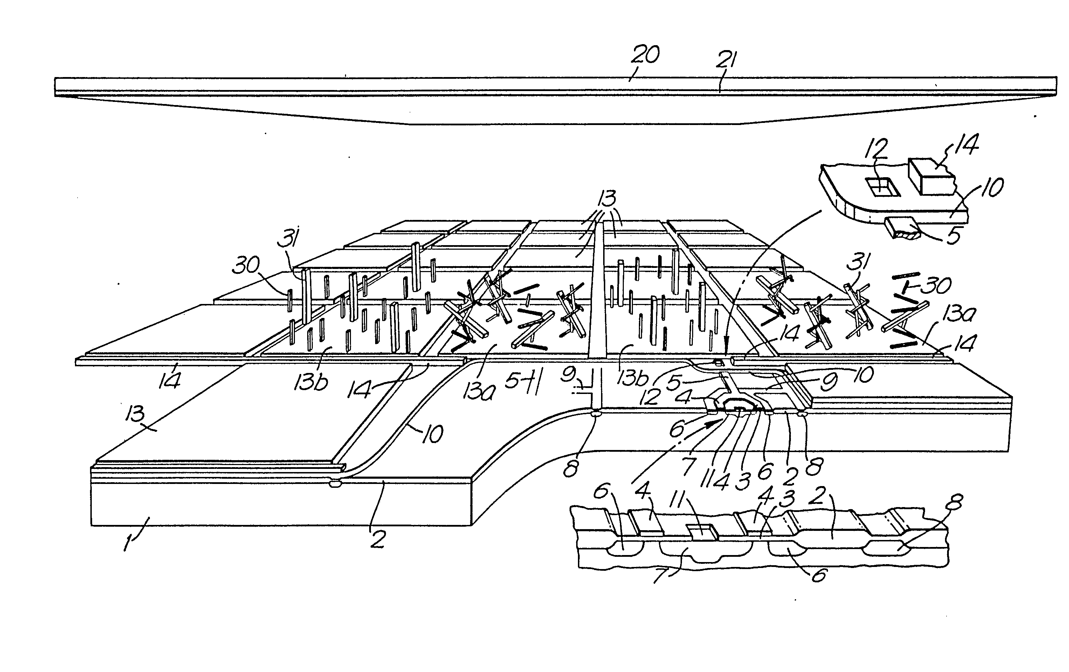

There follows a description of the construction of a liquid crystal display device embodying the invention in a preferred form. The description refers to the accompanying drawing which is a diagramatic part-sectioned exploded perspective view of the device.

The semiconductor gates for this device are field effect transistors provided on a single crystal slice of silicon by standard co-planar poly-silicon MOS n-channel technology.

A p-type silicon slice 1 is provided with field oxide 2 by the conventional co-planar nitride mask process. The masking provides apertures in the field oxide where the field effect transistors are to be formed, where column electrodes are to be formed, and where connections are to be made between the FET sources and the column electrodes. After removal of the masking material, the exposed silicon is covered with a layer 3 of gate oxide. Next the whole surface is covered with a layer of polysilicon, and then standard photolithographic techniques are used to delineate annular gate electrodes 4 and gate electrode connection strips 5 in the polysilicon, after which the remainder of the polysilicon is removed. The slice is now ready for the creation of the sources 6 and drains 7 of the FET's by implantation of an n-type dopant through the gate oxide 3. Alternatively the regions of gate oxide exposed by the removal of the polysilicon are themselves removed. This is particularly advantageous if the sources and drains are made by diffusion instead of by implantation. This implantation or diffusion also forms channels 8 of n-type material which constitute the column conductors, and further connection channels 9 of n-type material linking these column conductors 8 with the FET sources 6. Next the slice is covered with a conventional phosphorus doped silica layer 10 deposited by chemical vapour reaction. Windows 11 and 12 are opened in this layer to expose, respectively, a small central region of the drains 7, and the ends of the gate electrode connection strips 5. This is followed by a phosphorus diffusion which deepens the drain diffusion under the opening and reduces leakage. Following this diffusion, a layer (not separately shown) of titanium typically 200 to 300 nm thick is deposited by electron beam evaporation over the surface of the device, and on this is deposited, also by electron beam evaporation, a layer of aluminium typically 1.8 to 3.0 microns thick. The titanium is provided to form a barrier between the aluminium and the underlying silicon. The aluminium, which provides a thicker metallisation than is usual in FET manufacture, is deposited at a higher temperature than usual, about $320^{\circ}C$ instead of $200^{\circ}C$, and is deposited at a slower rate than usual, about 0.6 nm per second instead of about 3nm per second.

The slower rate and higher substrate temperature used for this deposition produce a deposit with a white predominately matt appearance rather than a good quality specular reflector. This is due to the conditions of deposition being such as to provide grain growth which leaves a grainy surface with grain sizes in the range 0.5 to 10 microns, but with little depth. The shallowness of grain depth can be seen by examining a cleaved coated substrate. Typically such a surface shows substantially no fissures extending to a depth greater than 0.5 micron.

A comparison of this surface with a good quality specular reflector was made by directing the same beam of light in turn at normal incidence against the two surfaces. With the specular reflector the reflected beam extended over a $10^{\circ}$ cone, whereas, with the non-specular surface, the cone was found to extend over about $40^{\circ}$. When the non-specular surface was wetted with a liquid having a refractive index of about 1.5 neither the spread nor the intensity of the scattered light was greatly changed. When the substrate temperature for deposition was changed from $320^{\circ}C$ to $280^{\circ}C$ a non-specular surface of similar properties was provided with a layer thickness of about 3 microns. A slower deposition rate in the region of 0.4 nm per second produces little change in the properties, but increasing the deposition rate to around 1.0 nm per second appears to produce a rougher surface which in the dry state scatters light through a slightly wider angle, but when moistened its brightness is significantly reduced compared with layers deposited at 0.6 nm per second.

It is believed that with silver similar topography should be obtainable at faster rates and/or lower substrate temperatures an account of the greater mobility of silver.

After the aluminium has been deposited, standard techniques of photolithography are used to etch tracks in the metallization to delineate a matrix array of electrode pads 13 with row conductors 14 between adjacent rows of pads. The row conductors 14 register with the windows 11 in the passivation layer 10 that expose the underlying gate electrode connection strips 5. In this way a direct connection is made between the row conductors and the gates of their respective FET's. The electrode pads make contact with the FET drains via the windows 11.

The drawing shows the column electrodes as registering with the gaps between the columns of electrode pads 13, but it has been found preferable in the case of diffused conductors to arrange for them to be offset so that they are covered by the pads 13 so that these conductors are protected from sensitivity to light incident upon the display.

In a modification of the above described sequence of processing steps, after the titanium layer is deposited, it is masked and etched away except for the areas covering and immediately surrounding the windows. Only then is the aluminium deposited. In this way the amount of titanium present in the completed device is reduced, and this eases the problems involved in the final annealing of the fully processed slice in hydrogen.

It will be appreciated that there are a number of alternatives to the just-described way of providing row and column connections respectively to the gate and source electrodes of the FET's. Thus for instance the column conductors could be fabricated in aluminium and the row conductors by the n-type channels. Alternatively one or other of the sets of conductors could be fabricated in polysilicon. In general, particularly for large area displays involving a large number of electrode pads, it will be desirable to make at least one of the sets of conductors in aluminium so as to take advantage of its potentially lower resistivity per unit length and its lower capacitance.

After the slice has been annealed, it is covered with a silica barrier layer (not shown) which provides electrical insulation between the electrode pads and the liquid crystal so as to preclude the possibility of electrolytic degradation of the liquid crystal. This layer, which is typically 0.1 microns thick, is then covered with a molecular alignment layer (not shown) for promoting alignment of the liquid crystal molecules in a preferred direction in the absence of an applied field. For achieving homeotropic alignment, a surfactant such as hexadecyl trimethyl ammonium bromide may be used, however parallel homogeneous alignment is preferred, and this alignment is in this instance promoted by the deposition of an obliquely evaporated layer of silicon monoxide. No tilt angle is required, and hence the deposition can be performed at an angle of about $30^{\circ}$ to the plane of the substrate.

The silicon slice is now ready to provide one of the confining surfaces for the liquid crystal layer. The other confining surface is constituted by a glass sheet 20 provided with a transparent electrode layer 21. This transparent electrode layer is covered with a barrier layer (not shown) and a molecular alignment layer (not shown) in the same manner, and for the same reasons, as such layers are provided on the silicon slice. In the final assembly of the cell, in which the slice 1 is secured to the sheet 20, the relative orientation of the molecular alignment directions is of no importance.

The next stage of manufacture concerns the assembly of the silicon slice 1 and the glass sheet 20 to form an enclosure for the liquid crystal. One way of achieving this is to bond the silicon slice on to a glass backing sheet (not shown), using for instance an adhesive such as a suitable epoxy resin. A thermoplastics ribbon (not shown) may then be deposited by screen printing around the perimeter of the silicon slice to form a perimeter seal and spacer for the assembly. After this has been applied the glass sheet 20 is placed in position against the silicon slice 1 with the electrode layer 21 facing the silicon, and the perimeter seal is made. A gap (not shown) in the perimeter seal forms an aperture by which the enclosure may be filled. Once the enclosure has been vacuum filled the aperture is sealed off with a suitable plug.

An alternative way of forming the required enclosure for the liquid crystal filling is to etch a well the size of the display area in one surface of a glass sheet. The electrode 21 and its covering layers are then formed at the bottom of the well which is of sufficient depth for the silicon slice to be bonded direct to the region of the glass sheet surrounding the etched well.

A further alternative way of forming the enclosure involves forming the perimeter seal in polysilicon, and bonding this to an electroded flat glass sheet just like the sheet 20 of the Figure.

An example of a suitable liquid crystal filling comprises the positive dielectric anisotropy nematic cyano-biphenyl eutectic mixture marketed by BDH under the designation E18, 1.8% of the anthraquinone blue dichroic dye marketed by BDH under the designation D16, optionally about 0.15% of the yellow isotropic dye Waxoline Yellow (to cancel out the residual colouration arising from imperfections in the alignment of the dye molecules when homeotropically aligned throughout the liquid crystal layer thickness), and a suitable quantity of a cyano-biphenyl chiral additive sufficient to provide a cholesteric pitch typically in the range from being equal to the thickness of the layer to being equal to a fifth of that thickness. This layer thickness is typically between 10 and 12 microns. In the Figure the orientations of the liquid crystal molecules have been represented by the smaller bars 30 while those of the pleochroic dye molecules have been represented by the larger bars 31. The diagram illustrates the situation in which there is no potential between the electrode 21 and electrode pads 13a, so that in these regions the liquid crystal is in the Grandjean state, the pleochroic dye molecules are aligned by their liquid crystal host in a variety of orientations, and therefore these regions appear coloured. A potential exists between the electrode 21 and electrode pads 13b of sufficient magnitude for the liquid crystal molecules in these regions of the layer to be caused to be homeotropically aligned. In these regions the pleochroic dye molecules are also homeotropically aligned by virtue of the guest-host interaction between the liquid crystal and the dye, and hence the dye shows no colour other than the residual amount arising from departures from perfect alignment. It is this residual colouration that is preferably cancelled out by adding to the filling an appropriate amount of an isotropic dye or dye mixture of complementary colour.

No such isotropic dye is required if, instead of a single pleochroic dye, the cell contains a mixture of such dyes whose colour and relative proportions are such as to provide a black colouration as is for instance described in the specification of our Published Patent Application Serial No. 2065158A.

A typical slice geometry has a 40 x 40 array of pads at 900 micron centres with 20 micron wide aluminium row conductors and 40 microns between adjacent sides of adjacent pads. Clearly a larger slice can accommodate a larger array of pads, and also, if greater resolution is required, the pads can be made significantly smaller since they are very much larger in area than their underlying FET's.

The row and column conductors may be connected with individual terminal pads by which electrical connection with the cell may be made. It will be appreciated that this involves having to make a relatively large number of external electrical connections with the cell. Normally at least some of the data to be used for driving the cell will be provided in serial form and thus requires processing by serial-to-parallel conversion means in order to translate it into a suitable form for applying to the row and column conductors. This conversion means can conveniently be formed in the silicon slice, with the advantage that thereby the required number of external connections with the cell is reduced.

It is generally desirable to have as small a gap as possible between the picture element pads of the matrix array. When using a geometry providing 16 micron wide row conductors 14 and a gap of 12 microns between the sides of those conductors and the nearer sides of the adjacent picture element pads 13 some problems were encountered in getting a good yield when using standard photolithographic technology to delineate the row conductors and the pads on the relatively thick granular layer of aluminium used to provide the required optical properties for the pads. The problems concerned the need to maintain a precise balance, avoiding on the one hand the pitfall of etching too much and so destroying the electrical continuity of one of the row conductors 14, and avoiding on the other hand the pitfall of underetching and so having a pad 13 directly connected with one of the row conductors 14.

It has been found that these problems can be avoided by separating the provision of the row conductors from the provision of the white non-specularly reflecting picture element pads by the use of two metallic layers in place of one. For this purpose the step of phosphorus diffusion to deepen the drain diffusion under the windows 11 is followed by the conventional deposition of a thin metallisation layer such as is normally used in high volume integrated circuit manufacture. This layer is typically of aluminium or aluminium silicon, and it is possible that the underlying titania barrier layer is in these circumstances unnecessary. Standard photolithography is used to etch this layer to produce the required row conductors and drain connection pads corresponding approximately in area with the required picture element pads. (The optical reflection properties of these drain connection pads is of no consequence). The structure is then covered with a thin insulating layer, typically 500 to 1000 nm thick of silica or preferably of silicon nitride. Alternatively a plastics layer such as of polyimide may be used. This is next covered with the white non-specularly reflecting layer of granular aluminium which is then etched to delineate picture element pads but no row conductors. These pads are capacitively coupled through the thin insulating layer with the corresponding drain connection pads underlying that layer.

Attention is now turned to the manner by which such display cells may be efficiently addressed. The display cell is required to be driven with an alternating voltage with zero or small (<50 mV) d.c. component, and with a frequency of not less than about 25 Hz. This is achieved by applying a 25 Hz square wave to the counter-electrode, typically alternating between 0 and (say) + 18 volts. Ideally each picture element, the region of the liquid crystal layer lying between a particular electrode element and the counter electrode, is driven via the column electrodes by a square wave which is either in phase with the waveform applied to the counter electrode, or $180^{\circ}$ out of phase. These square waves should have the same amplitude and operate between the same pair of voltage levels. Under these circumstances electrode elements that are driven in phase with the counter-electrode develop no voltage across their associated picture elements which are thus OFF; while those that are driven $180^{\circ}$ out of phase are subjected to an 18 volt potential difference whose polarity changes every 20 mS (for 25 Hz), and are ON. This arrangement is used to maximise the r.m.s. drive to ON elements for a given voltage capability of the FET devices because it is the r.m.s. voltage that determines the liquid crystal response. The operating voltage can be dropped by reducing the proportion of chiral additive in the liquid crystal layer, but this has the disadvantage of reducing the display contrast because the longer pitch of the layer in the cholesteric OFF state produces less absorption of colour.

In actual practice the display cell is operated with all the FET's held in their OFF state except while they are being addressed. All the FET's of a row are addressed simultaneously by temporarily turning ON the gates of that row while the appropriate potentials, 0 or 18 volts, are applied to the column conductors. The individual rows are addressed in sequence at a rate that refreshes the potential appearing on each electrode element before it has decayed too much. This addressing of the electrode elements on a time-sharing basis means that it is not possible for their polarities all to be reversed exactly in phase with the polarity reversal of the counter-electrode. Only one row can make its polarity reversal exactly in phase with any particular polarity reversal of the counter-electrode. The more remote rows must make their polarity reversals at times progressively further out of phase, and therefore different rows see the 'wrong' signals for different proportions of time. For the picture elements in at least one row this can not be less than approximately half the frame time (the time taken to scan all the rows once). Thus if the scanning of the rows proceeds consecutively from top to bottom the polarity reversal of the counter-electrode can be arranged to be coincident with the addressing of the middle row. Under these circumstances the upper half of the display is addressed with signals appropriate for the counter-electrode polarity after reversal, while the bottom half is addressed with signals appropriate for the counter-electrode polarity before reversal. All the rows in the top half therefore see the 'wrong' signal from their individual addressing times up to the time of the polarity reversal of the counter-electrode, while the rows in the bottom half see the wrong signal from the time of the polarity reversal of the counter-electrode up to their individual addressing times. Clearly the the 'worst' cases are the picture elements of the top and bottom rows, each of which see a 'wrong' signal for approximately half a frame time. Elements in intermediate rows see a shorter duration of 'wrong' signal which is in proportion to their distance from the centre row.

The proportion of 'wrong' signal time to total time can be reduced by increasing the number of frame scans made between consecutive polarity reversals of the counter-electrode. However there is a limit to the improvement that can be effected in this way. This is set on the one hand by the minimum frequency required for polarity reversal of the counter-electrode, previously stated to be in the region of 25 Hz; and on the other hand by the maximum scan frequency, which is set by the number of rows and the minimum time required for addressing a row.

In a 40 by 40 picture element array it is typically found convenient to have in the region of five frame times between consecutive polarity reversals of the counter-electrode. It is found with the cholesteric nematic phase change effect that there is a significant 'hysteresis' effect in the switching, in that a much larger signal is required to switch an element ON than is required merely to retain that element ON. By virtue of this 'hysteresis' effect the reduction in r.m.s. signal applied to ON elements consequent upon receipt 'wrong' signals for a proportion of the time produces a visually less significant effect than the effect produced by the complementary appearance of an unwanted r.m.s. applied to OFF elements. It is this unwanted r.m.s. signal liable to occur on OFF elements in certain rows that needs to be reduced or eliminated. This is achieved by momentarily blanking the display for a short period commencing with each polarity reversal of the counter-electrode. This blanking involves simultaneously switching on all the FET's and setting the potentials of their electrode elements equal to that of the new potential of the counter-electrode. This removes the unwanted r.m.s. signal from OFF picture elements, but retains the unwanted reduction in r.m.s. signal applied to ON elements, since ON elements are thereby switched OFF at the polarity reversal and remain off until they are next addressed.

As explained earlier, different rows are re-addressed at different time intervals after the polarity reversal and hence see a different magnitude of reduction in r.m.s. signal. Where these differences are liable to produce a visually noticeable effect steps can be taken to share the difference between different lines by making
the counter-electrode polarity reversal occur after a
non-integral number of frame times. This is exemplified
in the present instance by making the polarity reversal
occur after each 216 row scans, which corresponds to
5-2/5 frame times. This means that the polarity reversal
takes place at different times at five different rows which
are spaced eight rows apart, and that the complete
sequence is repeated every 27 frame times.

An estimate of the maximum difference in reduction
of r.m.s. signal to ON elements can be made by considering
row 1 and row 7, the 'best' and worst cases, when the
counter-electrode polarity reversal occurs at row 1. In
one complete sequence of 5-2/5 frame times line 1 is in the
'wrong' state for the following fractions of a frame time
0, 24/40, 8/40, 32/40, and 16/40. This totals 2 frame times.
The corresponding figures for line 7 are 7/40, 31/40,
15/40, 39/40, and 23/40, totalling 2-7/8 frame times.
Bearing in mind that the response is to r.m.s. voltage,
the difference between 'best' and 'worst' is seen to be
about 1.7%.

A typical example of drive circuitry for
effecting this type of operation of the cell consists of
four basic elements, comprising a keyboard, a data memory,
timing and control circuitry, and drive circuitry on a
mount to which the cell itself is attached. The keyboard
codes the entered data into ASCII and transfers it to the
data memory. The timing and control circuitry generates
a clock signal, the timing to scan the data in the memory,
and the row scanning sequence. The data memory transforms
the stored data into serial form that is output to the drive
circuitry. In the drive circuitry separate serial codes
are applied to two parallel out shift registers respectively
controlling the rows and the columns via buffers which are
held OFF while the data in the shift registers is being
changed. During the main part of the frame scan the
shift register associated with the drive to the rows has a single '1'. This is replaced with a full complement
of '1's at each polarity reversal of the counter-electrode.

CLAIMS

1. A dyed cholesteric-nematic phase change liquid crystal display cell which has a positive dielectric anisotropy cholesteric liquid crystal layer incorporating a pleochroic dye or dye mixture characterised in that the liquid crystal layer is sandwiched between an upper transparent electroded plate and a lower plate formed by or carrying a semiconductor layer provided with a matrix array of semiconductor gates connected with an overlying matrix array of electrodes elements adjacent the liquid crystal layer, and wherein the nature of the two surfaces confining the liquid crystal layer is such as to promote a particular molecular alignment in the layer in the absence of an applied electric field.

2. A cell as claimed in claim 1 wherein said nature of the two surfaces is such as to produce, in the absence of an applied electric field, molecular alignment of the liquid crystal layer in the Grandjean state.

3. A cell as claimed in claim 1 or 2 wherein the semiconductor layer is provided by a layer of silicon.

4. A cell as claimed in claim 1, 2 or 3 wherein the semiconductor layer is provided by a single crystal slice.

5. A cell as claimed in any preceding claim wherein the semiconductor gates are accessed by row and column conductors and wherein either the row conductors or the column conductors are formed in a semiconductor layer by channels of one conductivity type material bounded by material of the opposite conductivity type.

6. A cell as claimed in any preceding claim wherein the semiconductor gates are accessed by row and column conductors, and wherein either the row conductors or the column conductors, are formed in polysilicon deposited upon an electrically insulating layer covering the semiconductor layer.

7. A cell as claimed in any preceding claim wherein the semiconductor gates are accessed by row and column conductors, and wherein either the row conductors or the column conductors are formed in metal deposited upon an electrically insulating layer covering the semiconductor layer.

8. A cell as claimed in any preceding claim wherein each one of said matrix array of electrodes elements is accessed via two or more gates connected in parallel.

9. A cell as claimed in any preceding claim wherein the gates are provided by field effect transistors.

10. A cell as claimed in claim 9 wherein the field effect transistors are provided on a single crystal slice of silicon by co-planar polysilicon MOS technology.

11. A cell as claimed in any preceding claim wherein the semiconductor gates are accessed by row and column conductors which are electrically connected with individual terminal pads by which external electrical connection with the cell may be made.

12. A cell as claimed in any preceding claims 1 to 10 wherein the semiconductor gates are accessed by row and column conductors at least some of which conductors are electrically connected with the output of serial to parallel conversion means fabricated in the semiconductor layer.

13. A cell as claimed in any preceding claim wherein the matrix array electrodes elements provide a reflecting background for the liquid crystal layer.

14. A cell as claimed in claim 13 wherein the matrix array of electrodes elements is provided by a metal layer whose exposed surface has a white substantially non-specularly reflecting appearance.

15. A cell as claimed in claim 14 wherein the matrix array of electrodes elements is provided by a metal layer deposited by evaporation in such a way as to promote grain growth to provide a grainy surface topography with grain sizes in the range 0.5 to 10 microns extending to a depth substantially no greater than 0.5 microns.

16. A cell as claimed in claim 15 wherein the members of the matrix array of electrode elements are capacitatively coupled with the matrix array of semiconductor gates, the members of the matrix array of electrode elements being capacitatively coupled through an electrically insulating layer with the members of a corresponding matrix array whose members are pads in direct electrical connection with the corresponding members of the matrix array of gates, wherein the matrix array of pads is delineated by selective removal of material from an electrically conductive layer and wherein said selective removal of material from that electrically conductive layer is also used to delineate a set of row or column conductors by which the gates are accessed.

17. A cell as claimed in claim 13, 14, 15 or 16 wherein the matrix array of electrode elements is made of aluminium.

18. A cell as claimed in claim 17 wherein the aluminium of the matrix array of electrode elements is backed over at least a portion of their area by a layer of titanium preventing direct contact between the aluminium and the underlying semiconductor.

19. A cell as claimed in claim 13, 14, 15 or 16 wherein the matrix array of electrode elements is fabricated in silver.

20. A cell as claimed in any preceding claim wherein the matrix array of electrode elements is covered with an electrically insulating layer electrically isolating the array from direct current contact with the liquid crystal layer.

21. A cell as claimed in claim 20 wherein the electrode or electrodes of the upper electroded plate is covered with an electrically insulating layer electrically isolating the electrode and electrodes of that plate from direct current contact with the liquid crystal layer.

22. A cell as claimed in any preceding claim wherein the liquid crystal layer incorporates with the pleochroic dye or dye mixture an isotropic dye or dye mixture of complementary colour and in sufficient amount substantially to cancel the residual colouration shown by the pleochroic dye where the liquid crystal layer is held in the homeotropically aligned nematic state under the influence of an applied electric field across the thickness of the layer.

23. A method of operating a display cell as claimed in any preceding claim, wherein the electrode elements of the array are repetitively addressed via the gates accessed on a co-ordinate basis via the row and column conductors, wherein the electrode elements of a row are simultaneously accessed and different rows are repetitively strobed so that they are sequentially accessed and the electrode elements thereby repetitively refreshed, wherein regions of the layer of display medium between the counter-electrode and selected electrode elements are rendered visually distinguishable from regions of the layer between the counter-electrode and the remaining electrode elements by the establishment of an r.m.s. potential difference exceeding a threshold value between the counter-electrode and the selected electrode elements while substantially no potential difference is maintained between the counter electrode and the remaining electrode elements, wherein said potential difference between the counter-electrode and the selected electrode elements is periodically reversed by switching the potential of the counter electrode between two levels while the potential of the selected electrode elements switched in substantial antiphase between substantially the same two levels, wherein said switching is at a repetition frequency providing a plurality of addressings of each element within the duration of each potential level of the counter-electrode, wherein immediately each time the counter-electrode potential is switched all electrode elements are first simultaneously set to the same potential as the counter electrode potential, and thereafter normal strobing of the electrode elements is resumed.

24. A method of operating a display cell as claimed in claim 23 wherein the potential of the counter-electrode is switched at regular intervals corresponding to a non-integral number of complete addressings of the array.

25. A method as claimed in claim 24 wherein the non-integral number can be expressed · as a fraction whose divisor is a factor of the number of rows in the display device.

26. A matrix array display cell as claimed in any claim of claims 1 to 23 wherein the electrode elements of the array are capable of being accessed on a co-ordinate basis via the column conductors connected directly or capacitatively to the electrode elements via the gates whose operation is controlled by signals applied to the row conductors, wherein regions of the layer of display medium between the counter-electrode and any selection of electrode elements are capable of being rendered visually distinguishable from regions of the layer between the counter-electrode and the remaining electrode elements by the establishment of an r.m.s. potential difference exceeding a threshold value between the counter-electrode and the selected electrode elements while substantially no potential difference is maintained between the counter-electrode and the remaining electrode elements, which cell is provided with drive circuitry adapted to address repetitively the electrode elements of the array on a time-sharing basis via their gates in such a way that the electrode elements of a row are simultaneously accessed and the different rows are repetitively strobed so that they are sequentially accessed and the matrix elements thereby repetitively refreshed, wherein the drive circuitry is adapted to reverse periodically the potential difference between the counter-electrode and the selected electrode elements by switching the potential of the counter-electrode between two levels while the potential of the selected electrode elements is switched in substantial antiphase between substantially the same two levels, wherein said switching is at a repetition frequency providing a plurality of addressings of each element within the duration of each potential level of the counter-electrode, and wherein the drive circuitry is adapted to momentarily interrupt the strobing with the commencement of each change of potential of the counter-electrode, and, during said interruption set simultaneously the potential of all electrode elements to the potential of the counter-electrode before normal strobing of the electrode elements is resumed.

27. A matrix array display cell as claimed in claim 26 wherein the drive circuitry is adapted to switch the potential of the counter-electrode at regular intervals corresponding to a non-integral number of complete addressings of the array.

28. A matrix array display device as claimed in claim 27 wherein said non-integral number can be expressed as a fraction whose divisor is a factor of the number of rows in the display device.

20  21

12  14
10
5

13
31
30
13
31
30
13a
14
14
14
13b  14  13a  5 7 1  9  13b  5  9  10
8  12  4  4
13  6  8  7 11 4 3 6  2 8
10
6  4  11  4 3  2
2  6  6
1

1/1

0044618